# EUROPEAN PATENT APPLICATION

(11) **EP 2 113 300 A1**
(43) Date of publication of application: **04.11.2009**
(21) Application number: 08075319.7
(22) Date of filing: 25.04.2008
(51) Int. Cl.: B01J 19/00, B01L 3/00

(54) **Method device and system for creating a chemical reaction zone and the use of said device system**

(71) Applicant: Vereniging VU-Windesheim, 1081 HV Amsterdam (NL); Stichting voor Fundamenteel Onderzoek der Materie, 3527 JP Utrecht (NL)
(72) Inventor: Wuite, Gijs Jan Lodewijk, 1059 XH Amsterdam (NL); Noom, Maarten Cornelis, 1073 SV Amsterdam (NL); van Mameren, Joost, 10247 BERLIN (DE); van den Broek, Bram, 1057 ZS Amsterdam (NL)
(74) Representative: Houben, Christiaan Hein Willem Frans

(57) **Abstract**

A method for creating a chemical reaction in a reaction zone 2, comprising the steps of feeding multiple fluids 101-104 through feeding channels 5 to a reaction channel 3 such that said fluids 101-104 flow substantially laminar into the reaction channel 3, wherein each fluid 101-104 is discharged by a different discharge opening 6 into the reaction channel 3, moving the reaction zone 2 located in the reaction channel 3 from a first fluid 101 into a second fluid 102, wherein the reaction zone 2 is moved from the first fluid 101 into the second fluid 102 in the proximity of the discharge opening 6 discharging the second fluid 102, and also a device, system and use.

## Description

The invention relates to a method for creating a chemical reaction in a reaction zone, comprising the steps of feeding multiple fluids through feeding channels to a reaction channel such that said fluids flow substantially laminar into the reaction channel, wherein each fluid is discharged by a different discharge opening into the reaction channel, moving the reaction zone in the reaction channel from a first fluid into a second fluid.

This known method is used for performing a number of subsequent chemical reactions on a small scale. This means that small volumes, like µl and ml volumes, may be used for the feeding of the fluids and that the reaction zone may be a micron sized reaction centre. Said method is often used for DNA manipulation, protein determination or drug screening and can be used for DNA sequencing.

The reaction zone is located in the reaction channel. A reactant can be placed in the reaction zone. The reaction zone and the reaction channel may be moved relative to each other by moving means. This means that said moving means may be configured to move the reaction zone and/or the reaction channel. When the reaction zone is moved; said reactant moves along with the reaction zone. The reaction zone may comprise a small spherical shaped member, which may be a micron sized ball, with a surface configured to hold a specific reactant. Said reactant can be fixed to said surface of the ball. The ball is held in position and moved by for example optical tweezers or magnetic tweezers. The reaction zone may also comprise a cell or an (lipid) vesicle.

In the known method, the fluids flow substantially laminar besides each other through the reaction channel. The chemical reactions in the reaction zone are initiated by subsequently positioning the reaction zone in a different fluid flowing through the reaction channel. This means that one must be able to determine in which fluid the reaction zone is located in a specific time period.

In the situation that two fluids flow through the reaction channel, the two opposite side walls (when seen from above) of the reaction channel are used as a reference to determine in which fluid the reaction zone is located. When the reaction zone is positioned near the first side wall, the reaction zone is located in the first fluid and when the reaction zone is positioned near the second side wall, the reaction zone is located in the second fluid.

When three fluids flow through the reaction channel, markers like little particles or a specific color are added to the fluid flowing between the two fluid streams that are in contact with the two opposite side walls. When the reaction zone is positioned such that it is surrounded by the used marker, it is assumed that the reaction zone is located in the marked fluid.

A drawback of the known method is that one is not able to determine with a reasonable degree of certainty whether the reaction zone is located in a specific fluid in the situation that more than two fluids flow through the reaction channel. A cause of this is the fact that there always is a certain degree of mixing between the fluids flowing through the reaction channel. Because of that, one can not be sure that the area where the markers are located only comprises the marked fluid. This means that there is an uncertainty about the origin of the fluid in which the reaction zone is located when it is surrounded by a specific marker.

Moreover, the markers might interfere with the reaction centre by colliding into it. Second, the color of the fluid is very difficult to detect properly under a microscope because the fluids are flow is very small volumes through the reaction channel (µl and ml volumes).

The method according to the invention solves a drawback of the known method by moving the reaction zone from the first fluid into the second fluid in the proximity of the discharge opening discharging the second fluid. The first and second fluids meet each other for the first time in the proximity of the discharge opening of the second fluid. Because the fluids flow substantially laminar into the reaction center, the mixing of the first and second fluids is minimal in the proximity of the discharge opening of the second fluid. The discharge opening of the second fluid provides a clear indication of the location of the second fluid. This means that when the reaction zone is moved from the first fluid into the second fluid in the proximity of the discharge opening of the second fluid, one is able to determine exactly in which fluid the reaction zone is located.

A further drawback of the known method is that when the reaction zone is moved from the first fluid into the second fluid, it is moved through an area with a mixture of the first and second fluid. This is causes by the fact that there always is a certain degree in which the first and second fluids mix when they are flowing through the reaction channel. In many situations a substantial abrupt transfer from the first fluid into the second fluid is required. This is not possible when the reaction zone has to be moved through a relatively large area with a mixture of the two fluids. With the method according to the invention, it is ensured that the reaction zone is moved from the first fluid into the second fluid in the area where said mixture of two fluids is minimal. This way a substantial abrupt transfer of the reaction zone from the first fluid into the second fluid is realized.

Another drawback of the known method is that it can only be used with a small number of fluid feeds. When more than three fluid feeds are used, several fluids have to be marked by different markers. This causes some practical problems. First of all, it is difficult to mark the fluids differently so that they are distinguishable when flowing through the reaction channel. Furthermore, due to the mixing of the different fluids flowing through the reaction channel, the markers of the different fluids are also mixed. This increases the uncertainty in determining in which fluid the reaction zone is located. The functioning of the method according to the invention is independent of the number of fluid feeds. The method according to the invention can therefore easily be used with a large number of fluid feeds.

A drawback of the known method is also that the fluids have to be discharged into the reaction channel in such a way that said fluids flow substantially laminar through the reaction channel. With other words, the flow of the fluids further through the reaction channel has to remain substantially laminar. In the method according to the invention, the reaction zone is moved from the first fluid into the second fluid in the proximity of the discharge opening discharging the second fluid. This means that said fluids may be fed to the reaction channel in such a way that the fluids flow substantially laminar into the reaction zone, but it is not required that said flow of the fluids remains laminar further through the reaction channel. A certain degree of mixing is then allowed.

In an embodiment of the method according to the invention, the reaction zone is moved at a distance D of more than 0 µm and less than 200 µm, preferably more than 0 and less than 20 µm and more preferably more than 0 µm and less than 5 µm from the discharge opening discharging the second fluid.

In an embodiment of the method according to the invention, the first fluid and the second fluid meet each other in the reaction channel in a first contact area and the reaction zone is moved from the first fluid into the second fluid in said first contact area. That the two fluids meet each other for the first time means that the fluids come for the first time in contract with each other.

In a further embodiment of the method according to the invention, reaction zone may be moved along at least part of the discharge opening discharging the second fluid.

In another embodiment of the method according to the invention, each discharge opening comprises a side edge, the first fluid and the second fluid meet each other at the side edge of the discharge opening of the second fluid, and the reaction zone is moved such that said reaction zone passes the side edge of the discharge opening discharging the second fluid. The reaction zone may pass the side edge of the discharge opening discharging the second fluid in a direction substantial transverse to said side edge. The reaction zone may be moved in the proximity of said side edge. The reaction zone may be moved at a distance D of more than 0 µm and less than 200 µm, preferably more than 0 and less than 20 µm and more preferably more than 0 µm and less than 5 µm from said side edge.

Each discharge opening may comprise a centre and the reaction zone may substantially be moved towards the centre of the discharge opening discharging the second fluid. The reaction zone may be positioned in said centre.

In an embodiment of the method according to the invention, the reaction zone is during the movement thereof from the first fluid into the second fluid is substantially moved downstream with the fluids flowing through the reaction channel.

In a further embodiment of the method according to the invention, the fluids flow through the reaction channel in a flow direction and a number of the fluids are in said flow direction successively discharged in the reaction channel. It is also possible that a majority or all of the fluids are in said flow direction successively discharged in the reaction channel.

In the method according the invention, the chemical reaction may take place on a single molecule. The reaction zone may comprise DNA, a protein or a drug sample.

The invention further relates to a device for creating a chemical reaction in a reaction zone. Said device provides a solution to the drawback mentioned in relation to the method according to the invention. The device according to the invention comprises a reaction channel for holding multiple fluids flowing through said reaction channel, feeding means for feeding multiple fluids to the reaction channel such that said fluids flow substantially laminar into the reaction channel, wherein the feeding means comprise discharge openings for discharging the fluids into the reaction channel, wherein the reaction channel and the discharge openings are configured such that in use the reaction zone located in the reaction channel is movable from a first fluid to a second fluid in the proximity of the discharge opening discharging the second fluid.

In an embodiment of the device according to the invention, the fluids flow in use through the reaction channel in a flow direction and a number of the discharge openings are positioned successively in the flow direction. It is also possible that a majority or all of the discharge openings are positioned successively in the flow direction.

In an embodiment of the device according to the invention, each discharge opening comprises a side edge, the first fluid and the second fluid meet each other at the side edge of the discharge opening of the second fluid and the reaction channel and the discharge opening are configured such that the reaction zone is movable such that said reaction zone passes the side edge of the discharge opening discharging the second fluid. The reaction channel and the discharge opening may be configured such that in use the reaction zone is movable in a direction substantially transverse to said side edge. The reaction channel and the discharge opening may be configured such that in use the reaction zone may be moved in the proximity of the side edge of the discharge opening of the second fluid and/or at a distance D of more than 0 µm and less than 200 µm, preferably more than 0 and less than 20 µm and more preferably more than 0 µm and less than 5 µm of the side edge of discharge opening of the second fluid. Each discharge opening may comprise a centre and the reaction zone may in use be substantially movable towards the centre of the discharge opening discharging the second fluid. The reaction zone may be positionable in said centre. The reaction channel and the discharge openings may be configured such that in use and during the movement of the reaction zone from the first fluid in to the second fluid, the reaction zone is substantially moved downstream with the fluids flowing through the reaction channel.

The invention further relates to a system for creating a chemical reaction in a reaction zone, comprising a device according to the invention and moving means for moving the reaction zone and the reaction channel relative to each other. This means that said moving means may be configured to move the reaction zone and/or the reaction channel. Said moving means are configured to move the reaction zone from the first fluid in to the second fluid in the proximity of the discharge opening discharging the second fluid. The moving means may be any moving means known in the art, like optical or magnetic tweezers.

The invention also relates to a system for creating a chemical reaction in a reaction zone comprising a device according to the invention and observation means for observation of the chemical reactions in the reaction zone. The observation means may be any observation means known in the art, like an (electronic) microscope.

For examples of moving means and observation means which may be used, reference is made to the article "Visualizing single DNA-bound proteins using DNA as a scanning probe" by M. C. Noom, B. van den Broek, J. van Mameren, and G. J. Wuite in Nature Methods, 4(12):1031-6, 2007.

The invention relates furthermore to a system comprising said device, said moving means and said observation means.

Furthermore, the invention relates to the use of the device according to the invention or the system of the invention, preferably for the method of invention.

It will be clear that although the disclosed embodiments of the method, device, system and use thereof according the invention relate to the transfer of a reaction zone from a first fluid to a second fluid, the invention also applies for transfer of the reaction zone between any two fluids located flowing next to each other through the reaction zone.

Embodiments of the method, device, system and the use thereof according to the invention will be disclosed in detail in the accompanying drawings, wherein:
Figure 1 schematically shows a top view of a first embodiment of a device according the invention,
Figure 2 shows a detail II of the device of Fig. 1 in an enlarged view,
Figure 3 schematically shows a top view of a second embodiment of a device according the invention,
Figure 4 shows a detail IVI of the device of Fig. 3 in an enlarged view,
Figure 5 schematically shows a top view of a third embodiment of a device according the invention,
Figure 6 shows a detail VI of the device of Fig. 5 in an enlarged view,
Figure 7 schematically shows a top view of a fourth embodiment of a device according the invention,
Figure 8 shows a detail VIII of the device of Fig. 7 in an enlarged view,
Figure 9 schematically shows a perspective explosion view of a fifth embodiment of the device according to the invention, .
Figure 10 schematically show a view of an embodiment of a system according to the invention, and
Figure 11 schematically shows a perspective side view of a sixth embodiment of a device according the invention.

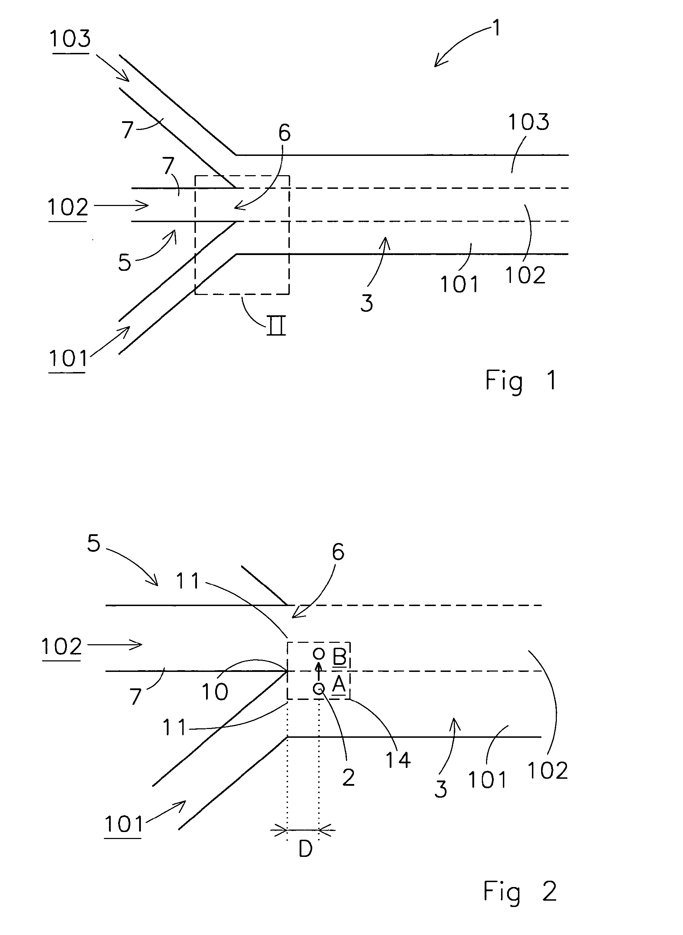

It is noted that the corresponding reference numbers in the figures 1-11 relate to corresponding features.

Figure 1 schematically shows a top view of a first embodiment of the device and method according the invention. The device 1 for creating a chemical reaction in a reaction zone 2 comprises a reaction channel 3 for holding multiple fluids 101-103. Feeding means 5 are connected to the reaction channel 3 for feeding fluid 101-103 into the reaction channel 3. The feeding means 5 comprise feeding channels 7 defining discharge openings 6 for discharging one of the fluid 101-103 into the reaction channel 3. The fluids 101-103 are substantially laminar discharged into the reaction channel 3. As a result of this, the fluids 101-103 will flow substantially laminar next each other when the fluids 101-103 entre the reaction channel 3. The fluids 101-103 flow further next to each other trough the reaction channel 3.

In Figure 2 is shows that the reaction zone 2 is moved from a first fluid stream 101 (position A) into a second fluid stream 102 (position B). The reaction zone 3 and the discharge openings 6 are configured such that the reaction zone 2 located in the reaction channel 3 is movable from a first fluid 101 in to a second fluid 102 in the proximity of the discharge opening 6 discharging the second fluid 102. The reaction zone 2 is moved at a distance D the discharge opening 6 discharging the second fluid 102.

The first fluid 101 and the second fluid 102 meet each in a first contact area 14. The reaction zone 2 is moved from the first fluid 101 into the second fluid 102 in said first contact area 14.

When moving the reaction zone 2 from the first fluid 101 into the second fluid 102, the reaction zone 2 is moved along at least part of the discharge opening 6 discharging the second fluid 102. Each discharge opening 6 comprises a side edge 10 and the reaction zone 2 is moved such that the reaction zone 2 passes the side edge of the discharge opening 6 discharging the second fluid 102. The two fluids 101 and 102 make for the first time contact, near said side edge 10. During the movement of the reaction zone 2 from the first fluid 101 into the second fluid 102, the reaction zone 2 is moved in a direction substantial transverse to said side edge 10. Each discharge opening 10 comprises a centre 11 and the reaction zone 2 is substantially moved towards the centre 11 of the discharge opening 6 discharging the second fluid 102.

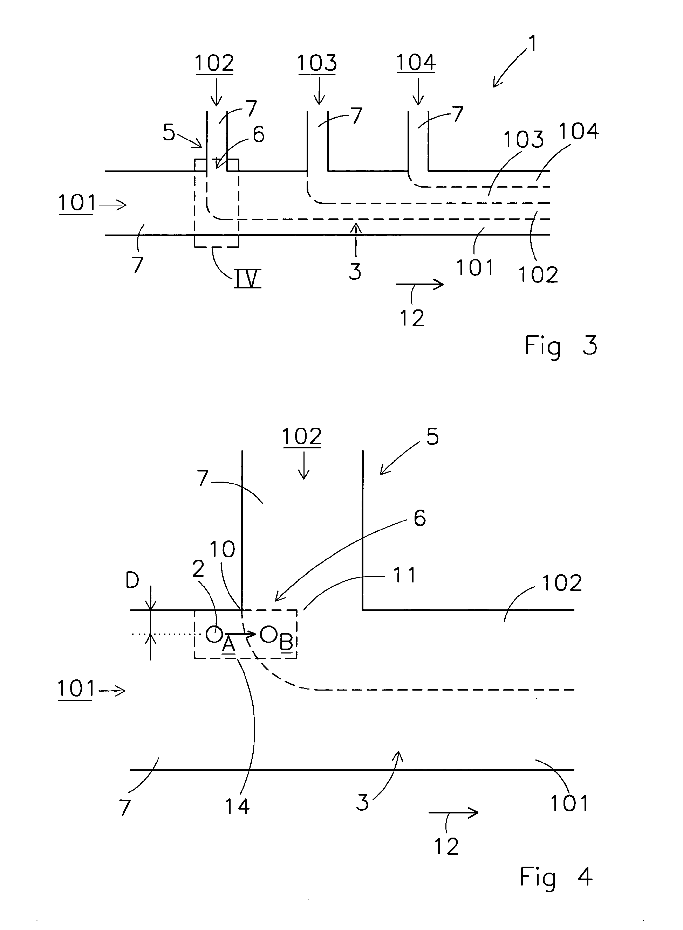

The figures 3 and 4 schematically show a second embodiment of the device and method according to the invention. The device 1 comprises four feeding channels 7 for feeding four fluids 101-104 into the reaction channel 3. The fluid 101-104 flow in use through the reaction channel 3 in a flow direction 12. The discharge openings 6 are positioned successively in said flow direction 12. Because of this, the fluids 101-104 are in said flow direction 12 successively discharged in the reaction zone 3. During the movement of the reaction zone 2 from the first fluid 101 in to the second fluid 102, the reaction zone is substantially moved down stream (in the flow direction) with the fluids 101-104 flowing through the reaction channel 3.

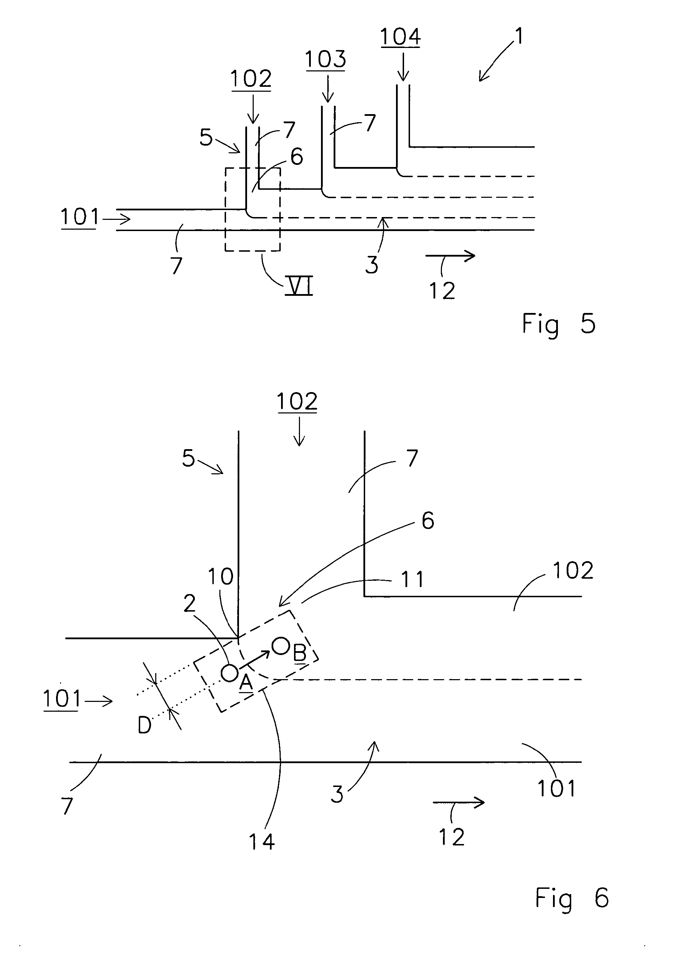

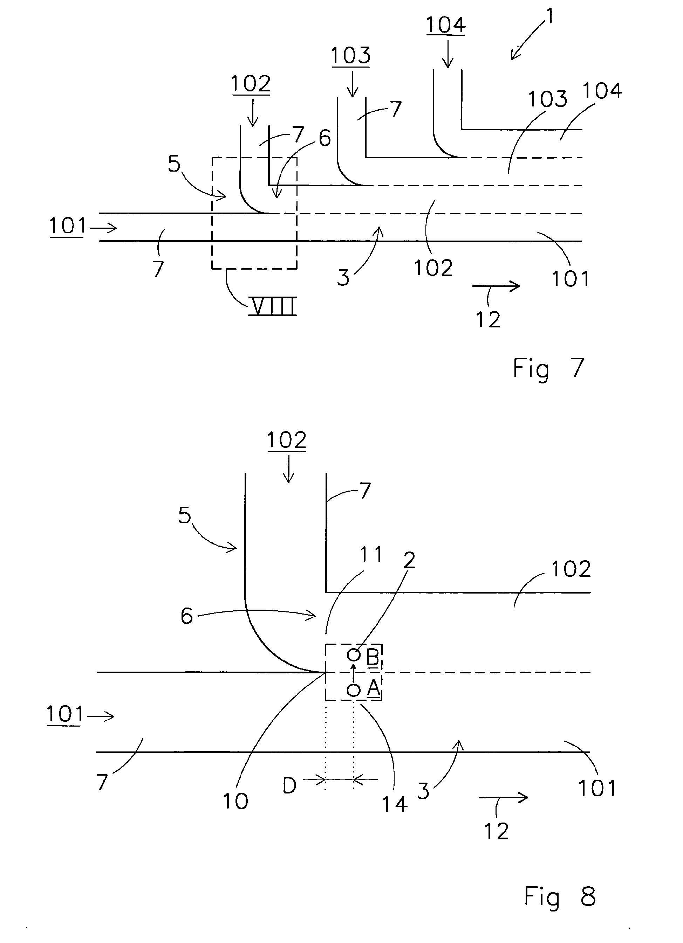

A third embodiment of a device and method according the invention are schematically shown in the figure 5 and 6. A fourth embodiment of a device and method according the invention are schematically shown in the figure 7 and 8.

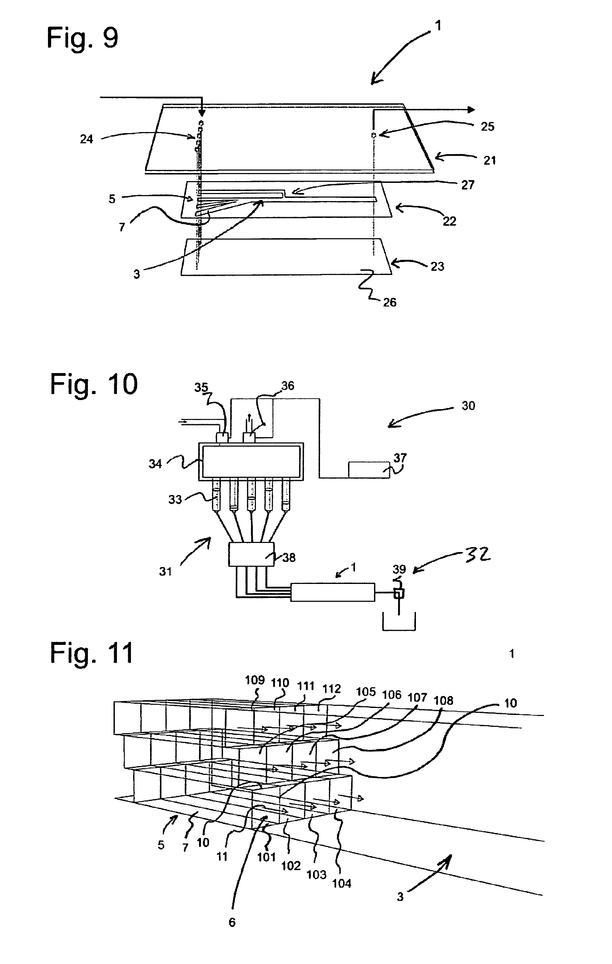

Figure 9 schematically shows an explosion view of a fifth embodiment of a device according the invention. Said device 1 comprises a first plate 21, second plate 22 and third plate 23. The first plate 21 comprises a flat top surface 26. The second plate 22 comprises at least one indentation 27 which forms the feeding means 5, feeding channels 7 and reaction channel 3. Said indentation 27 extends through the total thickness of the second plate 22, such that a through hole is formed. It is also possible that said indentations 27 extend through part of the thickness of the second plate 22. In the later case, it is possible that the device 1 operates without the third plate 23. The first plate 21 comprises input openings 24 for the supply of fluid to the feeding means 5 and at least one output opening 25 for the discharge of fluid out of the reaction channel 3. In use, the second plate 22 is place on the top surface of the third plate 23. The first plate 21 is placed on second plate 22 such that the input openings 24 and the output opening 25 are in fluid communication with the feeding means 5 and the reaction channel 3, respectively. The second plate 22 is placed between the first and third plate 21 and 23 such that the indentation 27 forms substantially closed channels, wherein the input and out openings 24 and 25 provide an access to the feeding means 5 and reaction channel 3, respectively.

Figure 10 schematically show a view of an embodiment of a system according to the invention. The system 30 comprises a device 1 according to figure 9, fluid supply means 31 and fluid discharge means 32. The fluid supply means 31 comprise multiple fluid holders 33. Each fluid holder 33 holds a specific fluid. The fluids held in said fluid holders are in use subjected to a pressure provided by pressure means 34. Said pressure means 34 comprises an air inlet 35 and an air outlet 36 and provides an air pressure. The pressure provided by the pressure means 34 is controlled by a computer 37 which controls the inlet and the outlet of air. The fluid containers 33 are connected to the device 1 via a first valve 38. The supply of the different fluids is controlled via said first valve 38. The discharge of the fluids is controlled a second valve 39.

Figure 11 schematically shows a perspective side view of a sixth embodiment of a device according the invention. The feeding means 5 of said device comprises twelve feeding channels 7 for feeding twelve fluids 101-112 into the reaction channel 3.

It will be clear that although the embodiments of the method, device, system and use thereof according the invention as shown in the figures relate to the transfer of a reaction zone from a first fluid to a second fluid, the invention also applies for transfer of the reaction zone between any two fluids located flowing next to each other in the reaction zone. For example, the transfer from the second fluid 102 to the third fluid 103 and the transfer from the third fluid 103 to the fourth fluid 104.

It will be clear for the person skilled in the art that many variations of the method, device system and the use thereof according the invention are possible without departing the scope of protection as defined in the claims.

## Claims

1. Method for creating a chemical reaction in a reaction zone 2, comprising the steps of
- feeding multiple fluids 101-104 through feeding channels 5 to a reaction channel 3 such that said fluids 101-104 flow substantially laminar into the reaction channel 3, wherein each fluid 101-104 is discharged by a different discharge opening 6 into the reaction channel 3,
- moving the reaction zone 2 located in the reaction channel 3 from a first fluid 101 into a second fluid 102, **characterised by**
moving the reaction zone 2 from the first fluid 101 into the second fluid 102 in the proximity of the discharge opening 6 discharging the second fluid 102.

2. Method according to claim 1, wherein the reaction zone 2 is moved at a distance D of more than 0 µm and less than 200 µm, preferably more than 0 and less than 20 µm and more preferably more than 0 µm and less than 5 µm from the discharge opening 6 discharging the second fluid 102.

3. Method according to claim 1 or 2, wherein the first fluid 101 and the second fluid 102 meet each other in a first contact area 14 and the reaction zone 2 is moved from the first fluid 101 into the second fluid 102 in said first contact area 14.

4. Method according to any of the preceding claims, wherein the reaction zone 2 is moved along at least part of the discharge opening 6 discharging the second fluid 102.

5. Method according to any of the preceding claims, wherein
each discharge opening 6 comprises a side edge 10,
the first fluid 101 and the second fluid 102 meet each other at the side edge 10 of the discharge opening 6 of the second fluid 102, and
the reaction zone 2 is moved such that said reaction zone 2 passes the side edge 10 of the discharge opening 6 discharging the second fluid 102.

6. Method according claim 5, wherein said reaction zone 2 passes the side edge 10 of the discharge opening 6 discharging the second fluid 102 in a direction substantial transverse to said side edge 10.

7. Method according to claim 5 and 6, wherein the reaction zone 2 is moved in the proximity of the side edge 10 of the discharge opening 6 of the second fluid 102.

8. Method according to any of the preceding claims, wherein each discharge opening 6 comprises a centre 11 and the reaction zone 2 is moved substantially towards the centre 11 of the discharge opening 6 discharging the second fluid 102.

9. Method according to any of the preceding claims, wherein during the movement of the reaction zone from the first fluid 101 in to the second fluid 102, the reaction zone is moved substantially downstream 12 with the fluids 101-104 flowing through the reaction channel 3.

10. Method according to any of the preceding claims, wherein the fluids 101-104 flow through the reaction channel 3 in a flow direction 12 and a number of the fluids 101-104 are in said flow direction 12 successively discharged in the reaction channel 3.

11. Method according to claim 10, wherein a majority or all of the fluids 101-104 are in said flow direction 12 successively discharged in the reaction channel 3.

12. Method according to any of the preceding claims, wherein the chemical reaction takes place on a single molecule.

13. Method according to any of the preceding claims, wherein the reaction zone comprises DNA.

14. Device for creating a chemical reaction in a reaction zone 2, comprising
- a reaction channel 3 for holding multiple fluids 101-104 flowing through said reaction channel 3,
- feeding means 5 for feeding multiple fluids 101-104 to the reaction channel 3 such that said fluids 101-104 flow substantially laminar into the reaction channel 3, wherein the feeding means 5 comprise discharge openings 6 for discharging the fluids 101-104 into the reaction channel 3, **characterised in that**
the reaction channel 3 and the discharge openings 6 are configured such that in use the reaction zone 2 located in the reaction channel 3 is movable from a first fluid 101 into a second fluid 102 in the proximity of the discharge opening 6 discharging the second fluid 102.

15. Device according to claim 14, wherein in use the fluids 101-104 flow through the reaction channel in a flow direction 12 and a number of the discharge openings 6 are positioned successively in the flow direction.

16. Device according to claim 15, wherein a majority or all of the discharge openings 6 are positioned successively in the flow direction.

17. System for creating a chemical reaction in a reaction zone, comprising a device 1 according to any of claim 14-16 and moving means 8 for moving the reaction zone 2 and the the reaction channel 3 relative to each other, wherein the moving means 8 are configured to in use move the reaction zone 2 from the first fluid 101 in to the second fluid 102 in the proximity of the discharge opening 6 discharging the second fluid 102.

18. System for creating a chemical reaction in a reaction zone comprising a device 1 according to any of claim 14-16 and observation means 9 for observation of the chemical reactions in the reaction zone 2.

19. System according to claim 17 and 18.

20. Use of the device according to any of claim 14-16 or the system of any of claim 17-19 for the method of any of claim 1-13.
